# EUROPÄISCHE PATENTSCHRIFT

(11) **EP 3 530 511 B1**
(45) Veröffentlichungstag und Bekanntmachung des Hinweises auf die Patenterteilung: **27.05.2020**
(21) Anmeldenummer: 18158753.6
(22) Anmeldetag: 27.02.2018
(51) Int. Cl.: B60K 37/06, B60K 35/00, G06F 3/0488

(54) **VERFAHREN ZUM REKONFIGURIEREN EINER BEDIENANORDNUNG FÜR EINE BAUMASCHINE**
METHOD OF RECONFIGURING A CONTROL DEVICE FOR A CONSTRUCTION MACHINE
PROCEDE DE RECONFIGURATION D'UN DISPOSITIF DE COMMANDE POUR UNE MACHINE DE CONSTRUCTION

(43) Veröffentlichungstag der Anmeldung: 28.08.2019
(73) Patentinhaber: Joseph Vögele AG, 67067 Ludwigshafen (DE)
(72) Erfinder: GRIMM, Frank, 68535 Edingen-Neckarhausen (DE); HANFLAND, Dennis, 67346 Speyer (DE)
(74) Vertreter: Grünecker Patent- und Rechtsanwälte PartG mbB

(56) Entgegenhaltungen:
- DE-A1-102009 018 955
- US-A1- 2015 263 309
- US-B1- 9 108 689

## Beschreibung

Die vorliegende Erfindung betrifft Bedienanordnungen für Baumaschinen, insbesondere für Stra-ßenfertiger oder Beschicker.

Aus der EP 3 067 774 A1 ist eine Bedienanordnung für eine Baumaschine bekannt, die eine Bedienvorrichtung mit einer Vielzahl von Bedienelementen zur Einstellung von Betriebsparametern der Baumaschine umfasst. Zudem umfasst die Bedienvorrichtung eine Displayeinheit, die zum Anzeigen technischer Daten, wie eingestellter Betriebsparameter, Bedienungsanleitungen, Serviceanweisungen oder momentaner Betriebszustände einzelner Funktionseinheiten der Baumaschine, konfiguriert ist. Die Displayeinheit kann ein berührungsempfindliches Display umfassen, welches zum Einstellen einer Vielzahl von Betriebsparametern der Baumaschine eine virtuelle Tastatur zur Verfügung stellt.

Gegenüber einer reinen Bedienbarkeit mittels physischer Bedienschalter hat das Bereitstellen einer virtuellen Tastatur zum Einstellen von Betriebsparametern der Baumaschine mittels eines berührungsempfindlichen Displays den Vorteil, dass die Bedienanordnung bei einer Änderung der Maschinenkonfiguration der Baumaschine oder Ähnlichem mittels Softwareupdate angepasst werden kann und kein physischer Austausch von Bedienelementen erforderlich ist. Zudem wird es möglich, für Baumaschinen unterschiedlicher Typen lediglich eine universelle Bedienanordnung herzustellen, welche dann jeweils durch Aufspielen geeigneter Software an die Erfordernisse für die Bedienbarkeit einer Baumaschine des gewünschten Typs angepasst wird.

Es hat sich jedoch gezeigt, dass bekannte berührungsempfindliche Displays zum Einstellen von Betriebsparametern einer Baumaschine während des Betriebs auch Nachteile haben. Beispielsweise kann es problematisch sein, wenn der Bediener nach dem Betätigen eines bestimmten Eingabebereichs des berührungsempfindlichen Displays keine Rückmeldung über die erfolgte Betätigung erhält, wie er dies beim Drücken einer physischen Taste hätte. Außerdem kann sich der Bediener zum Auffinden eines Eingabebereichs des berührungsempfindlichen Displays nicht auf seinen Tastsinn verlassen, sondern muss während des Bedienens der Baumaschine auf das Display schauen, um sicherzustellen, dass er den gewünschten Eingabebereich findet und betätigt. Dies erschwert es dem Bediener, neben dem Tätigen von Eingaben auch noch den Arbeitsvorgang und die Umgebung seiner Baumaschine zu überwachen.

DE 10 2009 018955 A1 offenbart eine Bedienanordnung für ein Kraftfahrzeug umfassend eine Bedienvorrichtung, welche ein berührungsempfindliches Display zur Eingabe von Bedienanweisungen durch einen Bediener umfasst, wodurch die Bedienanordnung zudem eine Bedienmaske mit Lokalisierungsmarkern umfasst; die Bedienvorrichtung zumindest ein erstes Ausrichtungsmerkmal zum Ausrichten der Bedienmaske an der Bedienvorrichtung in einer vordefinierten Betriebslage relativ zu der Bedienvorrichtung umfasst; und die Bedienmaske in der Betriebslage lösbar an der Bedienvorrichtung angebracht ist, wobei die Bedienmaske das berührungsempfindliche Display zumindest bereichsweise abdeckt, und wobei die Lokalisierungsmarker der Bedienmaske über festgelegten Bereichen des Displays liegen und ein Auffinden der festgelegten Bereiche des Displays zur Eingabe von Anweisungen erleichtern.

Aus der US 2015/0263309 A1 ist ein Verfahren zum Herstellen eines Touchscreen-Displays bekannt. Das Display wird durch Übereinanderstapeln einer Substratschicht, einer Displayeinheit, einer Verschlussschicht, einer Touchscreen-Schicht, einer Polarisierungsschicht und einer Fensterabdeckung aufgebaut.

Die US 9,108,689 B1 zeigt ein Baufahrzeug, in dessen Bedienkabine ein Display angeordnet ist. Es ist Aufgabe der vorliegenden Erfindung, eine Möglichkeit bereitzustellen, eine Bedienkonfiguration einer Bedienanordnung ohne großen Umbauaufwand anzupassen, wobei die Bedienanordnung zudem bezüglich ihrer Bedienbarkeit im Betrieb verbessert sein soll.

Diese Aufgabe wird durch den Gegenstand von Anspruch 1 gelöst. Die abhängigen Ansprüche geben vorteilhafte Ausführungsformen der Erfindung an.

Die Erfindung betrifft ein Verfahren zum Rekonfigurieren einer Bedienanordnung für eine Baumaschine.

Die Bedienanordnung umfasst eine Bedienvorrichtung mit einem berührungsempfindlichen Display zur Eingabe von Bedienanweisungen durch einen Bediener. Mittels des berührungsempfindlichen Displays können insbesondere Bedienanweisungen zum Einstellen von Betriebsparametern der Baumaschine und/oder Anzeigeanweisungen eingebbar sein. Auf dem berührungsempfindlichen Display können per Software unterschiedliche Bereiche unterschiedlichen Bedienfunktionen zugeordnet sein.

Die Bedienanordnung umfasst zudem eine erste Bedienmaske mit Lokalisierungsmarkern. Die Bedienvorrichtung umfasst zumindest ein erstes Ausrichtungsmerkmal, mittels dessen die erste Bedienmaske an der Bedienvorrichtung in einer vordefinierten Betriebslage relativ zu der Bedienvorrichtung ausrichtbar ist. Die erste Bedienmaske ist in der vordefinierten Betriebslage lösbar an der Bedienvorrichtung angebracht und deckt das berührungsempfindliche Display zumindest bereichsweise ab. Die Lokalisierungsmarker liegen über festgelegten Bereichen des Displays und erleichtern ein Auffinden der festgelegten Bereiche des Displays zur Eingabe von Anweisungen.

Das Verfahren umfasst das Verändern der Programmierung des berührungsempfindlichen Displays. Dies kann insbesondere durch Softwareanpassungen geschehen, insbesondere in Form eines Softwareupdates oder einer Neuinstallation einer anderen Software oder einer anderen Softwareversion. Bei dem Verändern der Programmierung des berührungsempfindlichen Displays können die Form, Anordnung, Position und/oder Anzahl der zur Eingabe bestimmter Bedienanweisungen konfigurierten Bereiche des berührungsempfindlichen Displays verändert werden. Das Verfahren umfasst zudem das Entfernen der an der Bedienvorrichtung lösbar angebrachten ersten Bedienmaske von der Bedienvorrichtung. Eine zweite Bedienmaske wird in einer vordefinierten Betriebslage an der Bedienvorrichtung mittels des zumindest einen ersten Ausrichtungsmerkmals der Bedienvorrichtung ausgerichtet. In der vordefinierten Betriebslage wird die zweite Bedienmaske lösbar an der Bedienvorrichtung angebracht. Die zweite Bedienmaske umfasst ebenfalls Lokalisierungsmarker. Nach dem Anbringen der zweiten Bedienmaske deckt diese das berührungsempfindliche Display zumindest bereichsweise ab, wobei die Lokalisierungsmarker der zweiten Bedienmaske über festgelegten Bereichen des Displays liegen. Die Lokalisierungsmarker der zweiten Bedienmaske sind so angeordnet, dass sie zumindest teilweise über anderen Bereiche des Displays liegen sind als die Bereiche, über denen die Lokalisierungsmarker der ersten Bedienmaske gelegen sind. Dies kann bereits erfüllt sein, wenn über einem Bereich, über dem kein Lokalisierungsmarker der ersten Bedienmaske gelegen ist, ein Lokalisierungsmarker der zweiten Bedienmaske liegt, oder wenn über einem Bereich, über dem ein Lokalisierungsmarker der ersten Bedienmaske gelegen ist, kein Lokalisierungsmarker der zweiten Bedienmaske liegt.

Das Verändern der Programmierung des berührungsempfindlichen Displays kann vor, nach oder gleichzeitig mit dem Entfernen der ersten Bedienmaske und/oder dem Ausrichten oder Anbringen der zweiten Bedienmaske erfolgen.

Durch Austausch der Bedienmasken lässt sich die Bedienanordnung nachträglich ohne größeren Umbauaufwand umkonfigurieren.

Das lösbare Anbringen der zweiten Bedienmaske kann ein Anschrauben an der Bedienanordnung, ein Anclipsen an die Bedienanordnung und/oder ein Aufschieben auf die Bedienanordnung umfassen.

Die Bedienmaske erleichtert dem Bediener die Eingabe von Bedienanweisungen mittels des berührungsempfindlichen Displays. Der Bediener kann durch die Lokalisierungsmarker der Bedienmaske die festgelegten Bereiche des Displays leichter auffinden. Somit kann der Bediener anderen, parallel auszuführenden Tätigkeiten, wie beispielsweise dem Überwachen der Baustelle, mehr Aufmerksamkeit widmen.

Die Bedienmaske kann ein durchsichtiges Material umfassen, so dass das Display durch die Bedienmaske hindurch betrachtet werden kann. So lassen sich auf einfache Art und Weise auch abgedeckte Bereiche des Displays zum Darstellen von Informationen nutzen. Es ist auch denkbar, dass die Bedienmaske vollständig oder teilweise undurchsichtig ist.

Die Bedienmaske kann so ausgebildet sein, das eine Betätigung des berührungsempfindlichen Displays durch das Material der Bedienmaske hindurch nicht möglich ist. Es ist aber je nach Anwendung und Ausgestaltung der Lokalisierungsmarker auch denkbar, die Bedienmaske so auszulegen, dass durch ein Drücken auf die Bedienmaske eine Betätigung von darunterliegenden Bereichen des Displays möglich ist.

Das erste Ausrichtungsmerkmal der Bedienvorrichtung stellt sicher, dass die Bedienmaske in der korrekten Betriebslage an der Bedienvorrichtung angebracht wird und die Lokalisierungsmarker tatsächlich über den gewünschten Bereichen des Displays liegen.

Da die Anbringung der Bedienmaske an der Bedienvorrichtung lösbar ist, kann die Bedienmaske relativ einfach gegen eine andere Bedienmaske ausgetauscht werden. Dies kann beispielsweise nützlich sein, wenn aufgrund eines Softwareupdates oder einer Änderung einer Maschinenkonfiguration der Baumaschine die Form, Anzahl und/oder Anordnung der aktiven Bereiche des berührungsempfindlichen Displays verändert wird. Die Bedienmaske kann dann durch eine andere Bedienmaske mit anders angeordneten und/oder geformten Lokalisierungsmarkern ersetzt werden. Auch die neue Bedienmaske kann mittels des ersten Ausrichtungsmerkmals der Bedienvorrichtung in einer vordefinierten Betriebslage relativ zu der Bedienvorrichtung ausgerichtet werden.

Vorzugsweise ist die vordefinierte Betriebslage durch das zumindest eine Ausrichtungsmerkmal eindeutig definiert. So kann eine Fehlausrichtung der Bedienmaske verhindert werden.

Die Bedienmaske kann zumindest ein zweites Ausrichtungsmerkmal umfassen, welches zum Ausrichten der Bedienmaske an der Bedienvorrichtung in der vordefinierten Betriebslage mit dem zumindest einen ersten Ausrichtungsmerkmal zusammenwirkt. Das erste Ausrichtungsmerkmal und das zweite Ausrichtungsmerkmal können beispielsweise durch physischen Eingriff zusammenwirken. Alternativ oder zusätzlich wäre es auch denkbar, dass das erste Ausrichtungsmerkmal und das zweite Ausrichtungsmerkmal derart zusammenwirken, dass sie ein optisches Ausrichten der Bedienmaske erlauben. Auch ein Zusammenwirken des ersten und des zweiten Ausrichtungsmerkmals mittels eines weiteren Elements ist denkbar.

Prinzipiell ist es ausreichend, wenn das erste Ausrichtungsmerkmal zum Ausrichten der Bedienmaske an der Bedienvorrichtung ausgelegt ist. Gemäß einer vorteilhaften Ausführungsform trägt das zumindest eine erste Ausrichtungsmerkmal aber auch zum lösbaren Halten der Bedienmaske an der Bedienvorrichtung bei. Hierzu kann das erste Ausrichtungsmerkmal mit einem Element der Bedienmaske zusammenwirken, insbesondere mit dem zweiten Ausrichtungsmerkmal.

Das zumindest eine erste Ausrichtungsmerkmal kann eine Erhöhung der Bedienvorrichtung umfassen und die Bedienmaske kann eine korrespondierende Vertiefung aufweisen, sodass die vordefinierte Betriebslage der Bedienmaske relativ zu der Bedienvorrichtung durch einen Eingriff der Erhöhung der Bedienvorrichtung in die Vertiefung der Bedienmaske definiert ist. Zusätzlich oder alternativ kann das erste Ausrichtungsmerkmal eine Vertiefung der Bedienvorrichtung umfassen und die Bedienmaske kann einen korrespondierenden Vorsprung aufweisen. Die vordefinierte Betriebslage der Bedienmaske kann durch einen Eingriff des Vorsprungs der Bedienmaske in die Vertiefung der Bedienvorrichtung definiert sein. Ein Ausrichten der Bedienmaske an der Bedienvorrichtung durch Eingriff einer Erhöhung oder eines Vorsprungs in eine Vertiefung ist bei der Montage besonders zuverlässig und intuitiv zu erreichen. Zudem wird hierdurch einem Verschieben der Bedienmaske in Bezug auf die Bedienvorrichtung entgegengewirkt.

Gemäß einer Ausführungsform umfasst das zumindest eine erste Ausrichtungsmerkmal ein oder eine Mehrzahl von Gewindelöchern und die Bedienmaske umfasst ein oder mehrere korrespondierende Durchgangslöcher für in die Gewindelöcher einschraubbare Schrauben. Die vordefinierte Betriebslage der Bedienmaske kann teilweise oder vollständig durch die Positionierung der Gewindelöcher und der Durchgangslöcher definiert sein. Neben ihrer Funktion zum Ausrichten der Bedienmaske tragen die Gewindelöcher und die Durchgangslöcher auch gleich zum lösbaren Befestigen der Bedienmaske an der Bedienvorrichtung bei.

Das zumindest eine erste Ausrichtungsmerkmal kann eine Begrenzung umfassen, deren Form zumindest bereichsweise einem Umriss der Bedienmaske entspricht. Die Bedienmaske kann durch Einsetzen in den von der Begrenzung definierten Bereich einfach ausgerichtet werden. Vorzugsweise ist die Bedienmaske nur in der vordefinierten Betriebslage in den von der Begrenzung umgebenen Bereich einsetzbar.

Zwischen der Bedienmaske und der Bedienvorrichtung könnte auch eine durch Aufschieben hergestellte lösbare Verbindung bestehen. Eine solche Schiebeverbindung erlaubt eine besonders definierte Ausrichtung der Bedienmaske in Bezug auf die Bedienvorrichtung. Das zumindest eine erste Ausrichtungsmerkmal kann einen Anschlag einer solchen Aufschiebeverbindung umfassen. Auch ein Anclipsen der Bedienmaske an die Bedienvorrichtung und/oder an das Display ist denkbar.

Vorzugsweise ist das zumindest eine erste Ausrichtungsmerkmal an der Bedienvorrichtung au-ßerhalb des berührungsempfindlichen Displays vorgesehen. Die Herstellung kann so erheblich vereinfacht werden, da ein standardmäßig verfügbares berührungsempfindliches Display verwendet werden kann.

Vorzugsweise umfassen die Lokalisierungsmarker taktile Strukturen, die von dem Bediener ertastbar sind. Solche taktilen Strukturen können dem Bediener die Orientierung auf der Bedienmaske erleichtern. Der Bediener muss durch Verwendung der taktilen Strukturen, zumindest sobald er mit der Displaykonfiguration ausreichend vertraut ist, nicht mehr immer auf das Display schauen, wenn er Bedienanweisungen eingeben will, und kann sich besser auf andere Tätigkeiten und das Überwachen der Baustellensituation konzentrieren. Zudem erhält der Bediener durch die taktilen Strukturen eine Rückmeldung darüber, dass er einen der festgelegten Bereiche des Displays getroffen hat. Auch die Gefahr eines versehentlichen gleichzeitigen Betätigens mehrerer der festgelegten Bereiche des Displays wird reduziert.

Bei den taktilen Strukturen kann es sich insbesondere um erhabene oder abgesenkte Strukturen oder um Oberflächenmodifikationen, wie beispielsweise aufgeraute Bereiche, handeln.

Besonders bevorzugt ist es, wenn die Lokalisierungsmarker Bedienöffnungen umfassen, durch welche die jeweiligen festgelegten Bereiche des berührungsempfindlichen Displays zur Eingabe von Bedienanweisungen durch Berührung erreichbar sind. Die Bedienöffnungen erlauben ein "blindes" Bedienen des berührungsempfindlichen Displays durch Ertasten der Bedienöffnungen und geben dem Benutzer eine taktile Rückmeldung. Insbesondere wird die Gefahr eines versehentlichen gleichzeitigen Betätigens mehrerer der festgelegten Bereiche des Displays reduziert. Bedienöffnungen können alleine oder in Verbindung mit anderen taktilen Strukturen vorgesehen werden.

Es wäre auch denkbar, die Lokalisierungsmarker anderweitig auszubilden, beispielsweise nichttaktil, insbesondere als Farbmarkierungen.

Die Bedienanordnung kann an einer Baumaschine vorgesehen sein. Bei der Baumaschine kann es sich insbesondere um einen Straßenfertiger mit einem Gutbunker und einer Einbaubohle oder um einen Beschicker für einen Straßenfertiger handeln. Die Erfindung kann aber auch auf andere Baumaschinen angewendet werden, wie beispielsweise auf Bagger, Lader, Minenfahrzeuge oder verschiedene Transportfahrzeuge. Vorzugsweise sind die festgelegten Bereiche des berührungsempfindlichen Displays jeweils einer bestimmten Funktion der Baumaschine zugeordnet.

Nachfolgend soll die Erfindung unter Bezugnahme auf die Figuren anhand von Ausführungsbeispielen weiter erläutert werden. Dabei zeigt
- Fig. 1a: eine schematische Darstellung einer Bedienanordnung für eine Baumaschine gemäß einer Ausführungsform in einem demontierten Zustand der Bedienmaske;
- Fig. 1b: eine schematische Darstellung der Bedienanordnung aus Figur 1 im befestigten Zustand der Bedienmaske;
- Fig. 2: eine schematische Darstellung einer Bedienanordnung gemäß einer weiteren Ausführungsform, wobei zwei gegeneinander austauschbare Bedienmasken gezeigt sind;
- Fig. 3: eine schematische Darstellung einer Bedienanordnung gemäß einer weiteren Ausführungsform;
- Fig. 4: eine schematische Darstellung eines Straßenfertigers mit einer Bedienanordnung gemäß einer Ausführungsform; und
- Fig. 5: eine schematische Darstellung eines Beschickers mit einer Bedienanordnung gemäß einer Ausführungsform.

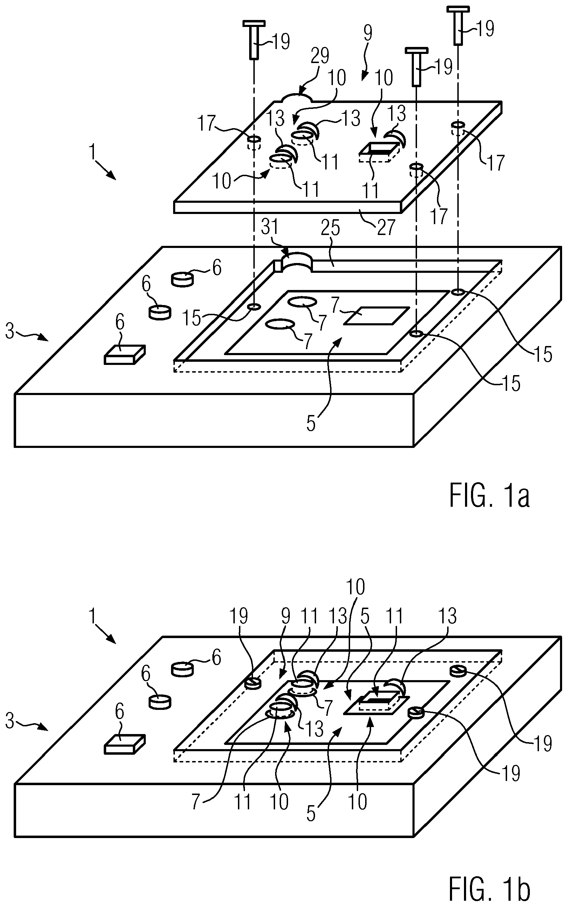

Die Figuren 1a und 1b zeigen eine Ausführungsform einer Bedienanordnung 1 für eine Baumaschine. Die Bedienanordnung 1 umfasst eine Bedienvorrichtung 3 mit einem berührungsempfindlichen Display 5. Außer dem berührungsempfindlichen Display 5 sind an der Bedienvorrichtung 3 weitere Eingabeelemente 6, hier in Form von Druckknöpfen dargestellt, zum Steuern der Baumaschine vorgesehen. Dies ist aber nicht zwingend erforderlich.

Das berührungsempfindliche Display 5 erlaubt einem Bediener, Bedienanweisungen einzugeben. Hierbei kann es sich beispielsweise um Eingaben zum Steuern der Baumaschine oder um Anzeigebefehle handeln. Auf dem Display 5 kann zudem ein geeignetes Benutzerinterface angezeigt werden, um die Bedienung zu erleichtern. Auf dem berührungsempfindlichen Display 5 sind mittels geeigneter Programmierung mehrere Eingabebereiche 7 definiert, die jeweils einer bestimmten Bedienanweisung zugeordnet sind. Zum Eingeben einer Bedienanweisung kann ein Bediener den jeweils zugeordneten Eingabebereich 7 mit seinem Finger und/oder einem Gegenstand, wie beispielsweise einem Stift, berühren. Bei dem berührungsempfindlichen Display 5 kann es sich um ein kommerziell erhältliches berührungsempfindliches Display handeln, welches mit einer Steuereinrichtung der Baumaschine verbindbar ist. Es ist auch denkbar, dass das berührungsempfindliche Display 5 bereits selbst über eine Steuereinrichtung verfügt, welche wiederum mit einer Steuereinrichtung der Baumaschine verbindbar ist. Vorzugsweise ist das berührungsempfindliche Display 5, insbesondere die Verteilung und Funktionsbindung der Eingabebereiche 7, mittels Software frei programmierbar. Es wäre im Übrigen auch denkbar, ein Tablet oder Mobiltelefon mit berührungsempfindlichem Display in die Bedienvorrichtung 3 fest oder lösbar einzusetzen.

Die Bedienanordnung 1 umfasst des Weiteren eine Bedienmaske 9 mit einer Mehrzahl von Lokalisierungsmarkern 10. In Figur 1a ist die Bedienanordnung 1 in einem auseinandergenommenen Zustand gezeigt, in dem die Bedienmaske 9 von der Bedienvorrichtung 3 entfernt wurde. Figur 1b zeigt einen montierten Zustand, in dem die Bedienmaske 9 lösbar in einer vordefinierten Betriebslage relativ zu der Bedienvorrichtung 3 an der Bedienvorrichtung 3 angebracht ist. Die Bedienmaske 9 kann, wie in den Figuren gezeigt, in Form einer Platte ausgebildet sein. Es wäre beispielsweise auch denkbar, die Bedienmaske 9 als Folie oder als Laminat mehrerer Folien vorzusehen.

In der vordefinierten Betriebslage deckt die Bedienmaske 9 das berührungsempfindliche Display 5 bereichsweise ab. Die Lokalisierungsmarker 10 der Bedienmaske 9 liegen bei angebrachter Bedienmaske 9 über festgelegten Bereichen des berührungsempfindlichen Displays 5. Die Programmierung des berührungsempfindlichen Displays 5 und die Ausgestaltung der Bedienmaske 9 können derart aufeinander abgestimmt sein, dass die Lokalisierungsmarker 10 über relevanten Eingabebereichen 7 des Displays 5 liegen.

In der gezeigten Ausführungsform umfassen die Lokalisierungsmarker 10 Bedienöffnungen 11. Die Bedienmaske 9 kann optional so ausgestaltet sein, dass in abgedeckten Bereichen keine Betätigung des Displays 5 möglich ist. Das berührungsempfindliche Display 5 ist bei angebrachter Bedienmaske 9 nur noch durch die Bedienöffnungen 11 der Bedienmaske 9 hindurch erreichbar. Es sind also bei angebrachter Bedienmaske 9 nur noch durch die Positionierung der Bedienöffnungen 11 festgelegte Bereiche des berührungsempfindlichen Displays 5 zur Eingabe von Anweisungen durch Berührung erreichbar. Im Betrieb kann der Bediener die in der Bedienmaske 9 ausgebildeten Bedienöffnungen 11 ertasten und so das berührungsempfindliche Display 5 bedienen, ohne ständig auf dieses schauen zu müssen. Die Bedienmaske 9 mit den Lokalisierungsmarkern 10 erleichtert also die Orientierung auf dem berührungsempfindlichen Display 5. Wenn ausschließlich Eingabebereiche 7 durch die Bedienöffnungen 11 erreichbar sind, kann sich der Bediener zudem sicher sein, dass bei einer Berührung des berührungsempfindlichen Displays 5 tatsächlich eine Eingabe getätigt wurde und er den jeweiligen Eingabebereich 7 nicht knapp verfehlt hat.

In der gezeigten Ausführungsform umfassen die Lokalisierungsmarker 10 außer den Bedienöffnungen 11 weitere taktile Strukturen 13, die die Orientierung für den Bediener weiter erleichtern. In der gezeigten Version sind die taktilen Strukturen 13 in Form von erhabenen Strukturen ausgebildet, die die Positionen der Bedienöffnungen 11 leichter auffindbar machen. Die gezeigten taktilen Strukturen 13 umgeben die Bedienöffnungen 11 teilweise. Es wäre aber beispielsweise auch denkbar, dass die taktilen Strukturen 13 die Bedienöffnungen 11 vollständig umgeben. Es wäre aber auch denkbar, dass taktile Strukturen 13 in Form von erhabenen Strukturen ohne das gleichzeitige Vorsehen von Bedienöffnungen 11 vorliegen. In diesem Fall bietet es sich an, das Display 5 durch die Bedienmaske 9 hindurch betätigbar auszubilden. Auch das Vorsehen von taktilen Strukturen 13 anderer Art ist zusätzlich oder alternativ denkbar, beispielsweise in Form von abgesenkte Strukturen oder Oberflächenmodifikationen, wie beispielsweise aufgerauten Bereichen.

Die lösbare Verbindung zwischen der Bedienvorrichtung 3 und der Bedienmaske 9 ist in der gezeigten Ausführungsform durch Schraubverbindungen realisiert. Die Bedienvorrichtung 3 umfasst eine Mehrzahl von Gewindelöchern 15 und die Bedienmaske 9 umfasst eine Mehrzahl korrespondierender Durchgangslöcher 17 für in die Gewindelöcher 15 einschraubbare Schrauben 19. Die Gewindelöcher 15 sind an Positionen außerhalb des berührungsempfindlichen Displays 5 in der Bedienvorrichtung 3 vorgesehen. In der gezeigten Ausführungsform sind die Gewindelöcher 15 derart asymmetrisch um das Display 5 herum verteilt, dass die Bedienmaske 9 nur in der korrekten Orientierung, der vordefinierten Betriebslage, an der Bedienvorrichtung 3 anbringbar ist. Die Gewindelöcher 15 bilden zusammen also ein erstes Ausrichtungsmerkmal zum Ausrichten der Bedienmaske 9 an der Bedienvorrichtung 3 in der vordefinierten Betriebslage relativ zu der Bedienvorrichtung 3. Die durch die Bedienmaske 9 ausgebildeten Durchgangslöcher 17 für die Schrauben 19 bilden zusammen ein zweites Ausrichtungsmerkmal, das zum Ausrichten der Bedienmaske 9 an der Bedienvorrichtung 3 in der vordefinierten Betriebslage mit dem ersten Ausrichtungsmerkmal zusammenwirkt. Die Gewindelöcher 15 und die Durchgangslöcher 17 erlauben sowohl ein Ausrichten der Bedienmaske 9 als auch ein Befestigen der Bedienmaske 9 an der Bedienvorrichtung 3.

Um die korrekte Montage der Bedienmaske 9 weiter zu erleichtern, weist die Bedienvorrichtung 3 gemäß der Ausführungsform der Figuren 1a und 1b ein weiteres erstes Ausrichtungsmerkmal auf. Dieses ist durch eine Begrenzung 25 gegeben, deren Form dem Umriss 27 der Bedienmaske 9 entspricht. In der gezeigten Version ist die Begrenzung 25 dadurch gegeben, dass ein dem Umriss 27 der Bedienmaske 9 entsprechender Bereich der Bedienvorrichtung 3, in welchem auch das Display 5 angeordnet ist, abgesenkt ist. Es wäre aber auch denkbar, dass die Begrenzung 25 anderweitig ausgebildet ist, beispielsweise durch eine umlaufende Erhebung. Der Umriss 27 der Bedienmaske 9 sowie der Verlauf der Begrenzung 25 können derart ausgebildet sein, dass die Bedienmaske 9 nur in der vordefinierten Betriebslage in den von der Begrenzung 25 umgebenen Bereich einsetzbar ist. In der gezeigten Ausführungsform ist dies durch eine Ausrichtungsnase 29 der Bedienmaske 9 und einen entsprechenden Aufnahmebereich 31 der Begrenzung 25 gegeben.

In der in den Figuren 1a und 1b gezeigten Ausführungsform sind zwei erste Ausrichtungsmerkmale vorgesehen, nämlich die asymmetrische Anordnung der Gewindelöcher 15 und die Begrenzung 25. Es wäre allerdings auch ausreichend, lediglich ein erstes Ausrichtungsmerkmal vorzusehen, welches ein Ausrichten der Bedienmaske 9 an der Bedienvorrichtung 3 in der vordefinierten Betriebslage erlaubt.

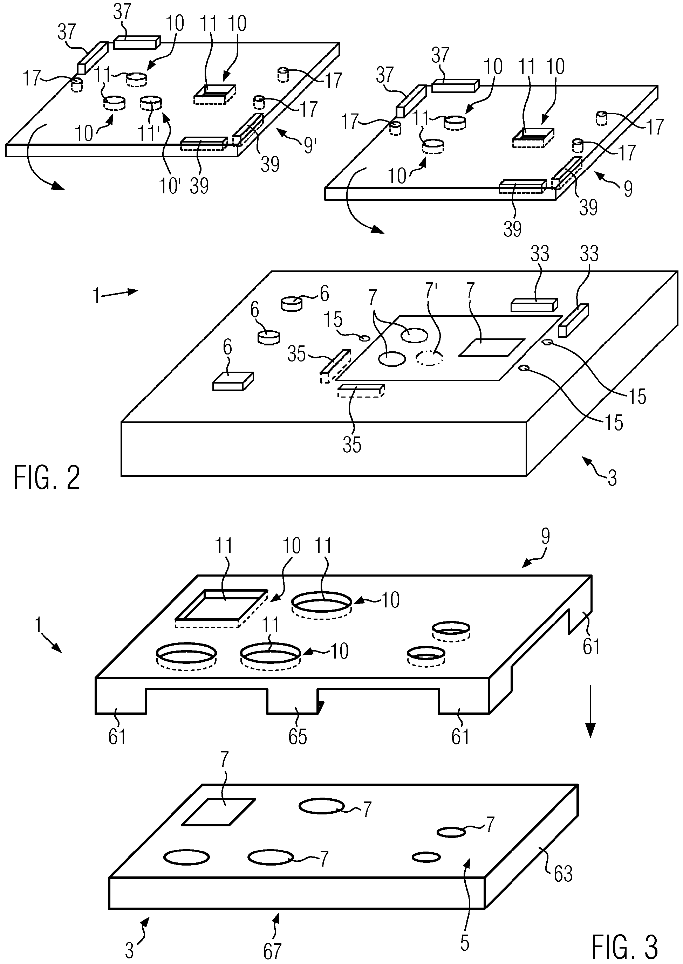

Figur 2 zeigt eine Bedienanordnung 1 gemäß einer weiteren Ausführungsform. In Figur 2 sind zwei Bedienmasken 9, 9' gezeigt, die sich in der Konfiguration der hier als Bedienöffnungen 11, 11' ausgebildeten Lokalisierungsmarker 10, 10' unterscheiden und alternativ zueinander an der Bedienvorrichtung 3 anbringbar sind.

Die in Figur 2 dargestellte Ausführungsform unterscheidet sich von der Ausführungsform der Figuren 1a und 1b unter anderem dadurch, dass die Bedienvorrichtung 3 keine Begrenzung 25 umfasst, deren Form zumindest bereichsweise dem Umriss 27 der Bedienmaske 9 entspricht. Stattdessen hat die Bedienvorrichtung 3 der Ausführungsform gemäß Figur 2 neben der speziellen Anordnung der Gewindelöcher 15 (identisch zu den Figuren 1a und 1b) ein anderes weiteres erstes Ausrichtungsmerkmal zum Ausrichten der Bedienmaske 9 an der Bedienvorrichtung 3 in der vordefinierten Betriebslage. Außerhalb des berührungsempfindlichen Displays 5 sind Erhöhungen 33 und Vertiefungen 35 der Bedienvorrichtung 3 vorgesehen. An der im montierten Zustand dem Display 5 zugewandten Seite der Bedienmaske 9 (in Figur 2 nach oben gerichtet) sind korrespondierende Vertiefungen 39 und Vorsprünge 37 vorgesehen. Die Erhöhungen 33 der Bedienvorrichtung 3 sind dazu ausgelegt, in die Vertiefungen 39 der Bedienmaske 9 einzugreifen, wenn sich die Bedienmaske 9 in der vordefinierten Betriebslage relativ zu der Bedienvorrichtung 3 befindet. Die Vorsprünge 37 der Bedienmaske 9 sind dazu ausgelegt, in die Vertiefungen 35 der Bedienvorrichtung 3 einzugreifen, wenn die Bedienmaske 9 in der vordefinierten Betriebslage relativ zu der Bedienvorrichtung 3 ist. In der gezeigten Ausführungsform bilden die Erhöhungen 33 und die Vertiefungen 35 der Bedienvorrichtung 3 ein erstes Ausrichtungsmerkmal zum Ausrichten der Bedienmaske 9 an der Bedienvorrichtung 3 in der vordefinierten Betriebslage. Die Vorsprünge 37 und Vertiefungen 39 der Bedienmaske 9 bilden ein zweites Ausrichtungsmerkmal, das zum Ausrichten der Bedienmaske 9 an der Bedienvorrichtung 3 in der vordefinierten Betriebslage mit dem ersten Ausrichtungsmerkmal zusammenwirkt.

Es wäre auch denkbar, die Vorsprünge 37 der Bedienmaske 9 und die Vertiefungen 35 der Bedienvorrichtung 3 wegzulassen, sodass lediglich die Erhöhungen 33 der Bedienvorrichtung 3 und die Vertiefungen 39 der Bedienmaske 9 vorgesehen sind. Alternativ wäre es auch möglich, die Erhöhungen 33 der Bedienvorrichtung 3 und die Vertiefungen 39 der Bedienmaske 9 wegzulassen, sodass lediglich die Vorsprünge 37 der Bedienmaske 9 und die Vertiefungen 35 der Bedienvorrichtung 3 vorgesehen sind. Die Erhöhungen 33 und die Vorsprünge 37 sowie die korrespondierenden Vertiefungen 35, 39 könnten auch in anderer Anzahl oder Form vorgesehen sein. Vorzugsweise erlauben sie ein eindeutiges Ausrichten der Bedienmaske 9 an der Bedienvorrichtung 3.

Die in Figur 2 direkt über der Bedienvorrichtung 3 dargestellte Bedienmaske 9 weist bezüglich der Anordnung der Bedienöffnungen 11 dieselbe Konfiguration auf wie die in den Figuren 1a und 1b dargestellte Bedienmaske 9. Zum Rekonfigurieren der Bedienanordnung 1 kann die Bedienmaske 9 gegen eine andere Bedienmaske 9' ausgetauscht werden. In Figur 2 ist beispielhaft eine Situation dargestellt, bei der die Programmierung des berührungsempfindlichen Displays 5 durch Hinzufügen eines weiteres Eingabebereichs 7' (in Figur 2 gestrichelt dargestellt) verändert wird. So kann die Bedienanordnung 1 beispielsweise durch Hinzufügen neuer Funktionen aufgerüstet werden. Um die Bedienanordnung 1 an die neue Displaykonfiguration mit dem zusätzlichen Eingabebereich 7' anzupassen, wird die in Figur 2 direkt über der Bedienvorrichtung 3 dargestellte erste Bedienmaske 9 entfernt und durch die daneben dargestellte zweite Bedienmaske 9' ersetzt, welche eine zusätzliche Bedienöffnung 11' aufweist. Ansonsten unterscheiden sich die Bedienmasken 9, 9' nicht von einander. Insbesondere sind die Einrichtungen zum Befestigen und Ausrichten der Bedienmaske 9, 9' bei beiden Bedienmasken 9, 9' identisch.

Figur 3 zeigt eine Bedienanordnung 1 gemäß einer weiteren Ausführungsform. Auch in dieser Ausführungsform sind die Lokalisierungsmarker 10 der Bedienmaske 9 als Bedienöffnungen 11 ausgebildet, die das Erreichen zugeordneter Eingabebereiche 7 des berührungsempfindlichen Displays 5 ermöglichen. Das Ausrichten und Befestigen der Bedienmaske 9 in Bezug auf das Display 5 erfolgt allerdings anders als bei den mit Bezug auf die Figuren 1a, 1b und 2 beschriebenen Ausführungsformen.

Gemäß der in Figur 3 dargestellten Ausführungsform umfasst die Bedienmaske 9 in Richtung auf die Bedienvorrichtung 3 vorstehende Anlageelemente 61, die dazu ausgelegt sind, an einer Seitenfläche 63 eines das Display 5 aufnehmenden Bereichs der Bedienvorrichtung 3 oder an einer Seitenfläche 63 des Displays 5 selbst anzuliegen. In der gezeigten Variante liegt das Display 5 im Wesentlichen freistehend vor oder ist vorstehend an einem nicht dargestellten Basisteil der Bedienvorrichtung 3 vorgesehen, so dass die Seitenfläche 63 durch das Display 5 selbst gebildet ist. Es wäre aber auch denkbar, dass das Display 5 in eine Erhöhung der Bedienvorrichtung 3 eingelassen ist und diese Erhöhung die Seitenfläche 63 definiert. Vorzugsweise sind die Anlageelemente 61 dazu ausgelegt, an Eckbereichen der Seitenfläche 63 anzuliegen und diese insbesondere zu umschließen. Das Zusammenspiel zwischen den Anlageelementen 61 und der Seitenfläche 63 erlaubt ein Ausrichten der Bedienmaske 9 in der vordefinierten Betriebslage relativ zu der Bedienvorrichtung 3.

Die Befestigung der Bedienmaske 9 erfolgt gemäß der in Figur 3 gezeigten Ausführungsform mittels eines Hakenelements 65, welches von der Bedienmaske 9 in Richtung auf die Bedienvorrichtung 3 vorsteht. Das Hakenelement 65 ist dazu ausgelegt, die Bedienmaske 9 durch clipsenden Eingriff mit einer entsprechenden Haltestruktur 67 der Bedienvorrichtung 3 an der Bedienvorrichtung 3 zu befestigen. In der gezeigten Variante greift das Hakenelement 65 clipsend in einen Bereich der Seitenfläche 63 ein. Es wäre aber auch denkbar, dass die Haltestruktur 67 als separates Merkmal der Bedienvorrichtung 3 ausgebildet ist. Auch das Vorsehen weiterer Hakenelemente 65 wäre denkbar.

Selbstverständlich sind die verschiedenen Ausführungsformen untereinander kombinierbar. Beispielsweise könnte bei der in Figur 3 gezeigten Bedienmaske 9 das Hakenelement 65 weggelassen werden und stattdessen eine Befestigung an der Bedienvorrichtung 3 mittels Schrauben eingesetzt werden, wie in den Figuren 1a, 1b und 2 gezeigt.

Die erfindungsgemäße Bedienanordnung 1 kann prinzipiell in beliebigen Baumaschinen eingesetzt werden. Besonders bevorzugt ist der Einsatz in selbstfahrenden Baumaschinen, wie beispielsweise in einem Straßenfertiger 41 oder einem Beschicker 47 für den Straßenbau.

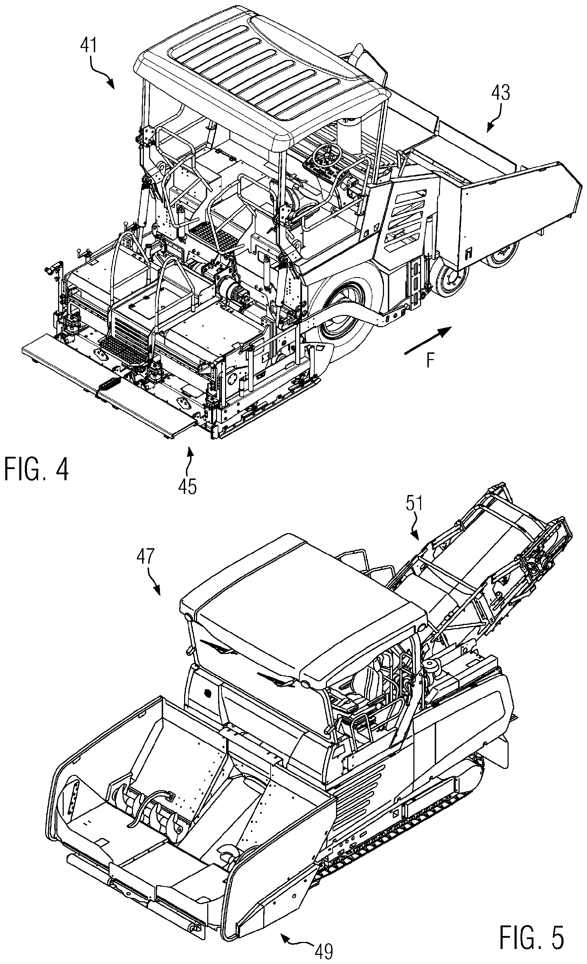

Figur 4 zeigt in schematischer Ansicht beispielhaft einen Straßenfertiger 41 mit einem in Einbaufahrtrichtung F vorne gelegenen Gutbunker 43 und einer in Fahrtrichtung hinten gelegenen Einbaubohle 45, welcher mit der erfindungsgemäßen Bedienanordnung 1 versehen werden kann.

Figur 5 zeigt in schematischer Ansicht einen Beschicker 47 für Straßenbauarbeiten mit einem Gutbunker 49 und einer Fördereinrichtung 51 für Einbaugut, welcher mit der erfindungsgemäßen Bedienanordnung 1 versehen werden kann.

## Patentansprüche

1. Verfahren zum Rekonfigurieren einer Bedienanordnung (1) für eine Baumaschine, wobei
die Bedienanordnung (1) eine Bedienvorrichtung (3) umfasst, welche ein berührungsempfindliches Display (5) zur Eingabe von Bedienanweisungen durch einen Bediener umfasst;
die Bedienanordnung (1) zudem eine erste Bedienmaske (9) mit Lokalisierungsmarkern (10) umfasst;
die Bedienvorrichtung (3) zumindest ein erstes Ausrichtungsmerkmal zum Ausrichten der ersten Bedienmaske (9) an der Bedienvorrichtung (3) in einer vordefinierten Betriebslage relativ zu der Bedienvorrichtung (3) umfasst;
die erste Bedienmaske (9) in der Betriebslage lösbar an der Bedienvorrichtung (3) angebracht ist, wobei die erste Bedienmaske (9) das berührungsempfindliche Display (5) zumindest bereichsweise abdeckt, und wobei die Lokalisierungsmarker (10) der ersten Bedienmaske (9) über festgelegten Bereichen (7) des Displays (5) liegen und ein Auffinden der festgelegten Bereiche (7) des Displays (5) zur Eingabe von Anweisungen erleichtern; und
das Verfahren Folgendes umfasst:
Verändern der Programmierung des berührungsempfindlichen Displays (5);
Entfernen der an der Bedienvorrichtung (3) angebrachten ersten Bedienmaske (9) von der Bedienvorrichtung (3);
Ausrichten einer zweiten Bedienmaske (9') in einer vordefinierten Betriebslage relativ zu der Bedienvorrichtung (3) mittels des zumindest einen ersten Ausrichtungsmerkmals; und
lösbares Anbringen der zweiten Bedienmaske (9') in der vordefinierten Betriebslage an der Bedienvorrichtung (3),
wobei die zweite Bedienmaske (9') nach dem Anbringen das berührungsempfindliche Display (5) zumindest bereichsweise abdeckt und Lokalisierungsmarker (10, 10') der zweiten Bedienmaske (9') über festgelegten Bereichen (7, 7') des Displays (5) liegen und ein Auffinden der festgelegten Bereiche (7, 7') des Displays (5) zur Eingabe von Anweisungen erleichtern, und wobei die Lokalisierungsmarker (10, 10') der zweiten Bedienmaske (9') so angeordnet sind, dass sie zumindest teilweise über anderen Bereichen (7, 7') des Displays (5) liegen, als die Bereiche (7), über denen die Lokalisierungsmarker (10) der ersten Bedienmaske (9) gelegen sind.

2. Verfahren nach Anspruch 1, wobei die vordefinierte Betriebslage durch das zumindest eine erste Ausrichtungsmerkmal eindeutig definiert ist.

3. Verfahren nach Anspruch 1 oder 2, wobei die Bedienmaske (9) zumindest ein zweites Ausrichtungsmerkmal umfasst, welches zum Ausrichten der Bedienmaske (9) an der Bedienvorrichtung (3) in der vordefinierten Betriebslage mit dem zumindest einen ersten Ausrichtungsmerkmal zusammenwirkt.

4. Verfahren nach einem der vorangehenden Ansprüche, wobei entweder das zumindest eine erste Ausrichtungsmerkmal eine Erhöhung (33) der Bedienvorrichtung (3) umfasst und die Bedienmaske (9) eine korrespondierende Vertiefung (39) aufweist und/oder das zumindest eine erste Ausrichtungsmerkmal eine Vertiefung (35) der Bedienvorrichtung (3) umfasst und die Bedienmaske (9) einen korrespondierenden Vorsprung (37) aufweist, so dass die vordefinierte Betriebslage der Bedienmaske (9) durch einen Eingriff des Vorsprungs (37) in die Vertiefung (35) definiert ist.

5. Verfahren nach einem der vorangehenden Ansprüche, wobei das zumindest eine erste Ausrichtungsmerkmal eine Mehrzahl von Gewindelöchern (15) umfasst und die Bedienmaske (9) eine korrespondierende Mehrzahl von Durchgangslöchern (17) für in die Gewindelöcher (15) einschraubbare Schrauben (19) aufweist, so dass die vordefinierte Betriebslage der Bedienmaske (9) durch die Positionierung der Gewindelöcher (15) und der Durchgangslöcher (17) definiert ist.

6. Verfahren nach einem der vorangehenden Ansprüche, wobei das zumindest eine erste Ausrichtungsmerkmal zum lösbaren Halten der Bedienmaske (9) an der Bedienvorrichtung (3) mit einem Element der Bedienmaske (9) zusammenwirkt, insbesondere mit dem zweiten Ausrichtungsmerkmal.

7. Verfahren nach einem der vorangehenden Ansprüche, wobei das zumindest eine erste Ausrichtungsmerkmal eine Begrenzung (25) umfasst, deren Form zumindest bereichsweise einem Umriss (27) der Bedienmaske (9) entspricht.

8. Verfahren nach Anspruch 7, wobei die Bedienmaske (9) nur in der vordefinierten Betriebslage in einen von der Begrenzung (25) umgebenen Bereich einsetzbar ist.

9. Verfahren nach einem der vorangehenden Ansprüche, wobei das zumindest eine erste Ausrichtungsmerkmal an der Bedienvorrichtung (3) außerhalb des berührungsempfindlichen Displays (5) vorgesehen ist.

10. Verfahren nach einem der vorangehenden Ansprüche, wobei die Lokalisierungsmarker (10) taktile Strukturen (13) aufweisen, insbesondere in Form von erhabenen oder abgesenkten Strukturen oder in Form von Oberflächenmodifikationen, wie beispielsweise aufgerauten Bereichen.

11. Verfahren nach einem der vorangehenden Ansprüche, wobei die Lokalisierungsmarker (10) Bedienöffnungen (11) umfassen, und wobei die festgelegten Bereiche (7) des berührungsempfindlichen Displays (5) durch die Bedienöffnungen (11) zur Eingabe von Anweisungen durch Berührung erreichbar sind.

12. Verfahren nach einem der vorangehenden Ansprüche, wobei die Bedienanordnung (1) in einer Baumaschine vorgesehen ist.

13. Verfahren nach Anspruch 12, wobei die festgelegten Bereiche (7) des berührungsempfindlichen Displays (5) jeweils einer bestimmten Funktion der Baumaschine (1) zugeordnet sind.

14. Verfahren nach einem der vorangehenden Ansprüche, wobei das lösbare Anbringen der zweiten Bedienmaske (9') ein Anschrauben an der Bedienanordnung (3), ein Anclipsen an die Bedienanordnung (3) und/oder ein Aufschieben auf die Bedienanordnung (3) umfasst.

## Claims

1. Method for re-configuring an operating arrangement (1) for a construction machine, wherein
the operating arrangement (1) comprises an operating device (3) comprising a touch-sensitive display (5) for inputting operating instructions by an operator;
the operating arrangement (1) further comprises a first operating mask (9) with localization markers (10);
the operating device (3) comprises at least one first alignment feature for aligning the first operating mask (9) on the operating device (3) in a pre-defined operating position relative to the operating device (3);
the first operating mask (9) is detachably attached to the operating device (3) in the operating position, wherein the first operating mask (9) at least partially covers the touch-sensitive display (5), and wherein the localization markers (10) of the first operating mask (9) lie over specified areas (7) of the display (5) and facilitate locating the specified areas (7) of the display (5) for inputting instructions; and
the method comprises:
changing the programming of the touch-sensitive display (5);
removing the first operating mask (9) attached to the operating device (3) from the operating device (3);
aligning a second operating mask (9') in a pre-defined operating position relative to the operating device (3) by means of the at least one first alignment feature; and
detachably attaching the second operating mask (9') to the operating device (3) in the pre-defined operating position,
wherein the second operating mask (9') covers the touch-sensitive display (5) at least partially after it has been attached, and localization markers (10, 10') of the second operating mask (9') lie over specified areas (7, 7') of the display (5) and facilitate finding the specified areas (7, 7') of the display (5) for entering instructions, and wherein the localization markers (10, 10') of the second operating mask (9') are arranged in such a way that they lie at least partially above other areas (7, 7') of the display (5) than the areas (7) above which the localization markers (10) of the first operating mask (9) were located.

2. Method according to claim 1, wherein the pre-defined operating position is unambigously defined by the at least one first alignment feature.

3. Method according to claim 1 or 2, wherein the operating mask (9) comprises at least one second alignment feature which interacts with the at least one first alignment feature to align the operating mask (9) at the operating device (3) in the pre-defined operating position.

4. Method according to one of the preceding claims, wherein either the at least one first alignment feature comprises an elevation (33) of the operating device (3) and the operating mask (9) has a corresponding recess (39) and/or the at least one first alignment feature comprises a recess (35) of the operating device (3) and the operating mask (9) has a corresponding projection (37), so that the pre-defined operating position of the operating mask (9) is defined by an engagement of the projection (37) in the recess (35).

5. Method according to one of the preceding claims, wherein the at least one first alignment feature comprises a plurality of threaded holes (15) and the operating mask (9) has a corresponding plurality of through holes (17) for screws (19) screwable into the threaded holes (15), so that the pre-defined operating position of the operating mask (9) is defined by the positioning of the threaded holes (15) and the through holes (17).

6. Method according to one of the preceding claims, wherein the at least one first alignment feature for releasably holding the operating mask (9) at the operating device (3) interacts with an element of the operating mask (9), in particular with the second alignment feature.

7. Method according to one of the preceding claims, wherein the at least one first alignment feature comprises a boundary (25), the shape of which at least sectionally corresponds to an outline (27) of the operating mask (9).

8. Method according to claim 7, wherein the operating mask (9) can only be inserted into an area surrounded by the boundary (25) in the pre-defined operating position.

9. Method according to one of the preceding claims, wherein the at least one first alignment feature is provided on the operating device (3) outside the touch-sensitive display (5).

10. Method according to one of the preceding claims, the localization markers (10) having tactile structures (13), in particular in the form of raised or lowered structures or in the form of surface modifications, such as, for example, roughened areas.

11. Method according to one of the preceding claims, wherein the localization markers (10) comprise operating openings (11), and wherein the specified areas (7) of the touch-sensitive display (5) are accessible through the operating openings (11) for inputting instructions by touch.

12. Method according to one of the preceding claims, wherein the operating arrangement (1) is part of a construction machine.

13. Method according to claim 12, wherein the specified areas (7) of the touch-sensitive display (5) are each assigned to a specific function of the construction machine (1).

14. Method according to any one of the preceding claims, wherein detachably attaching the second operating mask (9') comprises screwing onto the operating device (3), clipping onto the operating device (3) and/or sliding onto the operating device (3).

## Revendications

1. Procédé de reconfiguration d'un dispositif de commande (1) pour une machine de construction, le dispositif de commande (1) comprenant un dispositif de commande (3) qui comporte un écran tactile (5) pour la saisie d'instructions de commande par un opérateur;
le dispositif de fonctionnement (1) comprend en outre un premier panneau de commande (9) avec des marqueurs de localisation (10);
l'appareil de commande (3) comprend au moins une première caractéristique d'alignement pour aligner le premier panneau de commande (9) sur l'appareil de commande (3) dans une position de fonctionnement prédéfinie par rapport à l'appareil de commande (3);
le premier panneau de commande (9) est fixé de manière amovible sur l'appareil de commande (3) en position de fonctionnement, le premier panneau de commande (9) recouvrant au moins par endroits l'écran tactile (5) et les repères de localisation (10) du premier panneau de commande (9) se trouvant dans des zones (7) surdéfinies de l'écran (5) et facilitant la recherche des zones (7) définies de l'écran (5) pour l'entrée d'instructions; et
la procédure comprend les opérations suivantes:
modifier la programmation de l'écran tactile (5);
retirer le premier panneau de commande (9) fixé à l'appareil de commande (3) de l'appareil de commande (3) ;
aligner un second panneau de commande (9') dans une position de fonction-nement prédéfinie par rapport au dispositif d'opérateur (3) au moyen d'au moins une première caractéristique d'alignement; et
le second panneau de commande (9') peut être fixé de manière amovible à l'appareil de travail (3) dans la position de travail prédéfinie,
dans lequel le second panneau de commande (9') recouvre l'écran tactile (5) au moins dans certaines zones après que des marqueurs de fixation et de localisation (10, 10') du second panneau de commande (9') sont situés au-dessus de zones définies (7, 7') de l'écran (5) et qu'une constatation de la
dans lequel les repères de localisation (10, 10') du second panneau de commande (9') sont disposés de telle sorte qu'ils se trouvent au moins partiellement au-dessus d'autres zones (7, 7') de l'écran (5) que les zones (7) au-dessus desquelles se trouvent les repères de localisation (10) du premier panneau de commande (9).

2. Procédé selon la revendication 1, dans laquelle la position de fonctionnement prédéfinie est clairement définie par au moins une première caractéristique d'alignement.

3. Procédé selon les revendications 1 ou 2, dans lequel le masque de travail (9) comprend au moins une second caractéristique d'alignement qui interagit avec la au moins une première caractéristique d'alignement pour aligner le panneau de commande (9) sur le dispositif de travail (3) dans la position de travail prédéfinie.

4. Procédé selon l'une des revendications précédentes, dans lequel soit ladite au moins une première caractéristique d'alignement comprend une augmentation (33) de l'appareil de commande (3) et le panneau de commande (9) présente un évidement correspondant (39) et/ou la au moins une première caractéristique d'alignement comprend un évidement (35) de l'appareil de commande (3) et le panneau de commande (9) présente une saillie correspondante (37), de sorte que la position de fonctionnement prédéfinie du panneau de commande (9) soit définie par un engagement de la projection (37) dans l'évidement (35).

5. Procédé selon l'une des revendications précédentes, dans lequel ladite au moins une première caractéristique d'alignement comprend une pluralité de trous taraudés (15) et le panneau de commande (9) présente une pluralité correspondante de trous traversants (17) pour des vis (19) qui peuvent être vissées dans les trous taraudés (15), de sorte que la position de fonctionnement prédéfinie du panneau de commande (9) est définie par le positionnement des trous taraudés (15) et des trous traversants (17).

6. Procédé selon l'une des revendications précédentes, dans lequel ladite au moins une première caractéristique d'alignement pour le maintien amovible du panneau de commande (9) sur le dispositif de travail (3) coopère avec un élément du panneau de commande (9), en particulier avec la second caractéristique d'alignement.

7. Procédé selon l'une des revendications précédentes, dans lequel ladite au moins une première caractéristique d'alignement comprend une limite (25), dont la forme correspond au moins en partie à une déchirure (27) du panneau de commande (9).

8. Procédé selon la revendication 7, dans lequel le masque de travail (9) ne peut être utilisé que dans la position de travail prédéfinie dans une zone entourée par la limitation (25).

9. Procédé selon l'une des revendications précédentes, dans lequel ladite au moins une première caractéristique d'alignement est prévue sur le dispositif de commande (3) en haut de l'écran tactile (5).

10. Procédé selon l'une des revendications précédentes, dans lequel les repères de localisation (10) présentent des structures tactiles (13), en particulier sous la forme de structures surélevées ou abaissées ou sous la forme de modifications de surface, telles que des zones rugueuses.

11. Procédé selon l'une des revendications précédentes, dans lequel les marqueurs de localisation (10) comportent des ouvertures de commande (11), et dans lequel les zones définies (7) de l'écran tactile (5) peuvent être atteintes par les ouvertures de commande (11) pour l'entrée d'instructions par le toucher.

12. Procédé selon l'une des revendications précédentes, dans lequel le dispositif de fonctionnement (1) est prévu dans une machine de construction.

13. Procédé selon la revendication 12, dans lequel les zones définies (7) de l'écran tactile (5) sont chacune affectées à une fonction spécifique de la machine de chantier (1).

14. Procédé selon l'une des revendications précédentes, dans lequel la fixation détachable du second panneau de commande (9') consiste à le visser sur le dispositif de fonctionnement (3), à le clipper sur le dispositif de fonctionnement (3) et/ou à le faire glisser sur le dispositif de fonctionnement (3).
